# EUROPEAN PATENT SPECIFICATION

(11) **EP 1 993 412 B1**
(45) Date of publication and mention of the grant of the patent: **09.06.2010**
(21) Application number: 07712845.2
(22) Date of filing: 06.03.2007
(51) Int. Cl.: A47J 27/21

(54) **CONTROL FOR CORDLESS ELECTRICAL APPLIANCE**
STEUERUNG FÜR EIN SCHNURLOSES ELEKTROGERÄT
COMMANDE POUR APPAREIL ELECTRIQUE SANS FIL

(30) Priority: 08.03.2006 GB 0604703
(43) Date of publication of application: 26.11.2008
(73) Proprietor: OTTER CONTROLS LIMITED, Buxton, Derbyshire SK17 6LA (GB)
(72) Inventor: MOORE, Robin Keith, Derbyshire SK17 9BG (GB)
(74) Representative: Cross, James Peter Archibald
(86) International application number: PCT/GB2007/000787
(87) International publication number: WO 2007/101998

(56) References cited:
- WO-A-01/28294
- WO-A1-2006/067530
- GB-A- 2 316 229
- US-A- 4 713 522

## Description

### Field of the Invention

The present invention relates to an electrical apparatus.

### Background of the Invention

Cordless electrical connectors, by which an electrical appliance is removably connected to an electrical power base, are well known. 360° cordless electrical connectors, by which a liquid heating vessel may be located on its power base in any azimuthal orientation, are described in the applicant's patent publication WO 94/06185.

The applicant's patent publication no. EP 0 380 369 A1 discloses an electronic control for a cordless water boiling vessel, in which a sensor in the vessel is removably connected to a microprocessor in the base. Patent publication no WO 01/28294 describes an electronic control of a similar type, in which the sensor communicates with the electronic control via one or more additional terminals in the 360° connector. The provision of additional terminals makes the cordless power connector more complex and costly. The additional terminals may also be vulnerable to damage. Patent publication GB 2373105 A acknowledges that the additional terminals may not meet safety standards and/or may result in improper mating.

WO 01/28294 mentions, as alternatives to the use of additional terminals for communication between the sensor and the electronic control, the possibility of infrared, ultrasonic, low power radio wave or magnetic links. There is no discussion of how these links might be achieved, particularly in the context of a 360° connector.

GB-A-2316229 discloses a cordless liquid heating appliance in which heat from a vessel part is conducted to a base part which includes temperature control means.

WO-A-2006/067530, which forms part of the state of the art under Art. 54(3) EPC, discloses a non-360° cordless appliance in which a data connection is provided between the base unit and the cordless appliance.

### Statement of the Invention

According to one aspect of the present invention, there is provided an electrical apparatus according to independent claim 1.

According to another aspect of the present invention, there is provided an electrical apparatus according to independent claim 3.

Preferred embodiments of the invention are disclosed in the dependent claims.

An advantage of the invention is that the cordless connector need be no more complicated than a simple cordless power connector. The cordless connector may therefore avoid at least one of the problems arising from the use of additional terminals for signalling.

### Brief Description of the Drawings

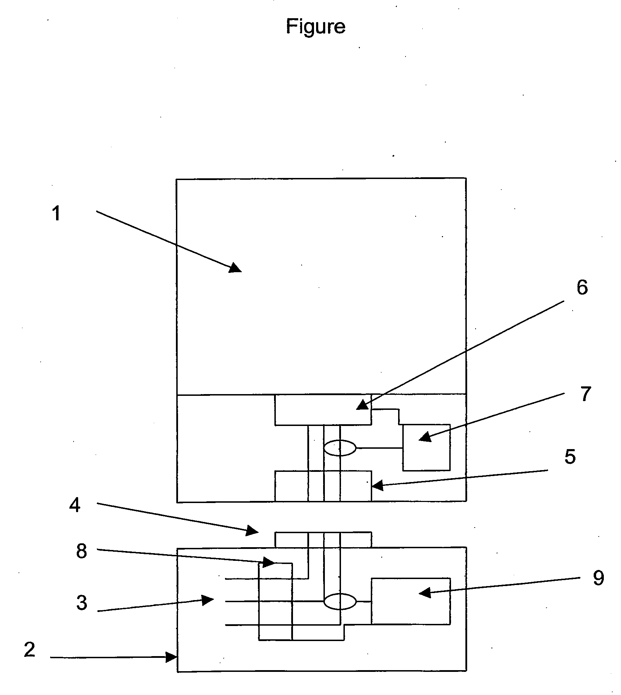

There now follows, by way of example only, a detailed description of preferred embodiments of the present invention in which the Figure is a schematic diagram of a cordless appliance in an embodiment of the present invention.

### Detailed Description of the Embodiments

The Figure shows a cordless electrical appliance arrangement, comprising an appliance 1 removably connectable to a power base 2 having a power connection 3 to a source of electrical power. In this embodiment, the power connection 3 comprises live and neutral poles and an earth, although in other embodiments the earth may be omitted. Electrical power connection between the base 2 and the appliance 1 is provided by a cordless connector 4 that mates with a cordless appliance inlet 5 to connect the live and neutral poles and the earth to an electrical load 6 in the appliance 1.

The appliance 1 includes a sensor 7 for sensing a state of part of the appliance I; for example, the state of the electrical load 6. The sensor 7 is arranged to insert onto one or more of the poles, or onto the earth, a signal indicative of the sensed state. The sensor 7 may be powered by the electrical power connection 3. Means for inserting the signal may be provided discretely from the sensor 7.

The power base 2 includes a control circuit 8 for controlling the supply of electrical power to the appliance 1, for example to reduce, vary or disconnect electrical power to the appliance 1. The power base 2 also includes a signal extraction means 9 for extracting the signal inserted by the sensor 7, and providing the signal as input to the control circuit 8. The control circuit 8 may be responsive to a predetermined condition of the signal to control the supply of electrical power to the appliance 1.

The sensor 7 may insert the signal as a digital signal that is not easily corrupted by interference or fluctuation in the power connection. The signal extraction means 9 may include a filter for preventing the signal from causing interference on the power connection 3.

In one embodiment of the invention, the appliance 1 may include a user control by which a user controls the operational state of the appliance 1, and the user control may insert a user control signal on one of the poles or the earth for extraction by the signal extraction means 9 and provision to the control circuit 8, so that the control circuit 8 is responsive to the user control on the appliance 1.

In another embodiment of the invention, the control circuit 8 is provided in the appliance 1 and the user control is provided in the base 2. Hence, signal insertion means is provided in the base 2 and signal extraction means 9 is provided in the appliance 1.

The appliance 1 may be an electrically heated appliance 1 having a heating element 6 for heating the appliance and/or its contents. The sensor 7 is arranged to detect the temperature of the appliance and/or contents and insert a signal representative of the temperature on one of the poles or on the earth. When the temperature exceeds a predetermined value, the corresponding signal is detected by the control circuit 8 and power to the vessel 1 is reduced or disconnected altogether.

The electrically heated appliance may be a cordless vessel such as an electric kettle or jug, or a coffee maker, deep fat fryer or slow cooker, or other appliance for heating liquids and/or solids. Alternatively, the appliance may be a heated cordless appliance such as an iron or hair tongs.

The means for inserting and extracting communication signals on one of the poles or the earth may use a 'mains signalling' technique. Mains signalling is known per se, and aspects are described in draft British Standard PEL/205. However, a known application of mains signalling is to communicate between different electronic devices each connected to a different socket of a mains circuit.

In outline, the means for inserting modulates the communication signal in such a way as to be distinguishable from the 50/60 Hz mains signal, including typical fluctuations and interference thereon. For example, the communication signal may be frequency modulated, pulse code modulated or spread spectrum modulated. The modulated signal is added to one of the poles or the earth. The means 9 for extracting the communication signal demodulates the communication signal and decodes it as necessary before providing it to the control circuit 8.

The embodiments described above are illustrative of rather than limiting to the present invention. Alternative embodiments apparent on reading the above description may nevertheless fall within the scope of the invention.

## Claims

1. An electrical apparatus comprising a cordless electrical appliance (1) having a cordless connector (5) including a terminal for the provision of electrical power to the appliance (1), the apparatus including a user control for generating a user control signal by which the user controls the operational state of the appliance (1), **characterised in that** the terminal is further arranged to carry said user control signal.

2. The apparatus of claim 1, including a power base (2) for connection to said cordless connector (5) so as to provide electrical power thereto.

3. An electrical apparatus comprising a cordless power base (2) having a cordless connector (4) for connection to a cordless appliance (1) so as to provide electrical power thereto via a terminal, the apparatus including a user control for generating a user control signal by which the user controls the operational state of the appliance (1), **characterised in that** the terminal is further arranged to carry said user control signal.

4. The apparatus of any preceding claim, wherein the appliance (1) includes the user control and the power base (2) includes a power control (8) arranged to control the provision of electrical power to the appliance (1) in response to the user control signal.

5. The appliance (1) of any one of claims 1 to 3, wherein the power base (2) includes the user control and the appliance (1) includes a power control (8) arranged to control the provision of electrical power to the appliance (1) in response to the user control signal.

6. The apparatus of any preceding claim, wherein the terminal is a live or neutral terminal.

7. The apparatus of any preceding claim, wherein the terminal is an earth terminal.

8. The apparatus of any preceding claim, wherein the cordless connector (4; 5) is a 360° connector.

9. The apparatus of any preceding claim, wherein the signal is a modulated signal.

## Patentansprüche

1. Elektrische Vorrichtung, die ein schnurloses elektrisches Gerät (1) umfasst, mit einem schnurlosen Steckverbinder (5), der einen Anschluss für die Versorgung des Gerätes (1) mit elektrischer Energie umfasst, wobei die Vorrichtung eine Benutzersteuerung zum Erzeugen eines Benutzer-Steuersignals umfasst, durch das der Benutzer den Betriebszustand des Gerätes (1) steuert, **dadurch gekennzeichnet, dass** der Anschluss weiter dafür eingerichtet ist, das Benutzer-Steuersignal zu übertragen.

2. Vorrichtung nach Anspruch 1, mit einem Sockel (2) zum Anschluss an den schnurlosen Steckverbinder (5), um diesen mit elektrischer Energie zu versorgen.

3. Elektrische Vorrichtung mit einem schnurlosen Sockel (2) mit einem schnurlosen Steckverbinder (4) zum Anschluss an ein schnurloses Gerät (1), um dieses über einen Anschluss mit elektrischer Energie zu versorgen, wobei die Vorrichtung eine Benutzersteuerung zum Erzeugen eines Benutzer-Steuersignals umfasst, durch die der Benutzer den Betriebszustand des Gerätes (1) steuert, **dadurch gekennzeichnet, dass** der Anschluss weiter dafür eingerichtet ist, das Benutzer-Steuersignal zu übertragen.

4. Vorrichtung nach einem der vorangehenden Ansprüche, wobei das Gerät (1) die Benutzersteuerung und der Sockel (2) eine Spannungssteuerung (8) umfasst, die dafür eingerichtet ist, die Versorgung des Gerätes (1) mit elektrischer Energie als Reaktion auf das Benutzer-Steuersignal zu steuern.

5. Gerät (1) nach einem der Ansprüche 1 bis 3, wobei der Sockel (2) die Benutzereteuerung und das Gerät (1) eine Spannungssteuerung (8) umfasst, die dafür eingerichtet ist, die Versorgung des Gerätes (1) mit elektrischer Energie als Reaktion auf das Benutzer-Steuersignal zu steuern.

6. Vorrichtung nach einem der vorangehenden Ansprüche, wobei der Anschluss ein spannungsführender oder ein Neutralleiteranschluss ist.

7. Vorrichtung nach einem der vorangehenden Ansprüche, wobei der Anschluss ein Erdungsanschluss ist.

8. Vorrichtung nach einem der vorangehenden Ansprüche, wobei der schnurlose Steckverbinder (4; 5) ein 360°-Steckverbinder ist.

9. Vorrichtung nach einem der vorangehenden Ansprüche, wobei das Signal ein moduliertes Signal ist.

## Revendications

1. Dispositif électrique comprenant un appareil électrique sans fil (1) ayant un connecteur sans fil (5) comprenant une borne pour la fourniture d'une alimentation électrique à l'appareil (1) le dispositif comprenant une commande d'utilisateur pour générer un signal de commande d'utilisateur par lequel l'utilisateur commande l'état opérationnel de l'appareil (1), **caractérisé en ce que** la borne est en outre agencée pour porter ledit signal de commande d'utilisateur.

2. Dispositif selon la revendication 1, comprenant une base d'alimentation (2) pour la connexion audit connecteur sans fil (5) de manière à lui fournir une alimentation électrique.

3. Dispositif électrique comprenant une base d'alimentation sans fil (2) ayant un connecteur sans fil (4) pour une connexion à un appareil sans fil (1) de manière à lui fournir une alimentation électrique par une borne, le dispositif comprenant une commande d'utilisateur pour générer un signal de commande d'utilisateur par lequel l'utilisateur commande l'état opérationnel de l'appareil (1), **caractérisé en ce que** la borne est en outre agencée pour porter ledit signal de commande d'utilisateur.

4. Dispositif selon l'une quelconque des revendications précédentes, dans lequel l'appareil (1) comprend la commande d'utilisateur et la base d'alimentation (2) comprend une commande d'alimentation (8) agencée pour commander la fourniture d'alimentation électrique à l'appareil (1) en réponse au signal de commande d'utilisateur.

5. Appareil (1) selon l'une quelconque des revendications 1 à 3, dans lequel la base d'alimentation (2) comprend la commande d'utilisateur et l'appareil (1) comprend une commande d'alimentation (8) agencée pour commander la fourniture d'alimentation électrique à l'appareil (1) en réponse au signal de commande d'utilisateur.

6. Dispositif selon l'une quelconque des revendications précédentes, dans lequel la borne est une borne de phase ou neutre.

7. Dispositif selon l'une quelconque des revendications précédentes, dans lequel la borne est une borne de terre.

8. Dispositif selon l'une quelconque des revendications précédentes, dans lequel le connecteur sans fil (4 ; 5) est un connecteur à 360°.

9. Dispositif selon l'une quelconque des revendications précédentes, dans lequel le signal est un signal modulé.
